# EUROPÄISCHE PATENTSCHRIFT

(11) **EP 2 363 013 B1**
(45) Veröffentlichungstag und Bekanntmachung des Hinweises auf die Patenterteilung: **17.04.2013**
(21) Anmeldenummer: 11001564.1
(22) Anmeldetag: 25.02.2011
(51) Int. Cl.: A01B 49/02, A01B 49/06, A01B 63/114, A01B 63/14, A01B 29/04

(54) **Bestellkombination mit Vorrichtung zur Einhaltung eines Schlupfgrenzwertes**
Cultivating and sowing combination with device for complying with a slip threshold
Combiné de semis doté d'un dispositif pour maintenir une valeur limite de glissement

(30) Priorität: 02.03.2010 DE 102010009819
(43) Veröffentlichungstag der Anmeldung: 07.09.2011
(73) Patentinhaber: Lemken GmbH & Co. KG, 46519 Alpen (DE)
(72) Erfinder: Wolff, Carsten, 47647 Kerken (DE)
(74) Vertreter: Schulte & Schulte

(56) Entgegenhaltungen:
- EP-A1- 1 273 215
- EP-A1- 1 336 330
- EP-A1- 1 825 733
- EP-A2- 0 632 953
- WO-A1-03/086842
- WO-A1-2009/071253
- DE-A1- 3 513 064
- DE-A1- 19 633 119
- US-A1- 2008 257 570

## Beschreibung

Die Erfindung betrifft eine Bestellkombination gemäß dem Oberbegriff des Patentanspruches 1.

Eine derartige Bestellkombination ist der europäischen Patentanmeldung EP 2 016 816 zu entnehmen. Bei dieser Bestellkombination wird der Bodendruck der Walze konstant gehalten bzw. geregelt, indem der Saatgutbehälter verschwenkt wird. Je nach Füllstand oder gewünschtem Bodendruck wird der Saatgutbehälter so zur Walze hin oder von der Walze weg geschwenkt, dass der gewünschte Effekt der Rückverfestigung erzielt wird. Die Bestellkombination gemäß der europäischen Patentanmeldung EP 2 016 816 weist ein eigenes Fahrwerk auf, das in diesem Fall je nach ausgeübtem Bodendruck der Walze mehr oder weniger Gewicht der Bestellkombination tragen muss. Bekannt sind auch Bestellkombinationen mit eigenem Fahrwerk, bei denen unter anderem auch der Bodendruck der Walze über ein Hydrauliksystem so geregelt wird, dass der Bodendruck möglichst konstant bleibt. Der Systemdruck des Hydrauliksystems wird dabei über eine Druckregelung so eingestellt, dass abhängig davon auch ein gleichbleibender Bodendruck erzielt wird. Bei Bestellkombinationen, die vom Traktor getragen werden, wird das tragende Fahrwerk der Bestellkombination durch die Hinterachse des Traktors gebildet. Eine Änderung des Bodendruckes der Walze kann durch eine geänderte Einstellung der Gewichtsverteilung der Bestellkombination auf die benachbarten Werkzeuge wie Säschare oder Druckrollen erfolgen oder über die Hubhydraulik des Traktors. Diese Einstellung des Bodendruckes der Walze erfolgt üblicherweise nicht automatisch. Stellt der Traktorfahrer fest, dass die Walze steht bzw. einen zu großen Erdwall vor sich herschiebt, hebt er die Bestellkombination so weit aus, bis er davon ausgeht, dass die Walze wieder ausreichend gut arbeitet. Alle bekannten Lösungen könnten nicht sicherstellen, dass die jeweilige Walze optimal und störungsfrei arbeitet und sicher vom Boden angetrieben wird. Der konstante Bodendruck der Walze sorgt zwar in der Regel für ein sehr gutes Arbeitsergebnis, kann aber nicht immer sicher verhindern, dass sich vor der Walze beispielsweise ein Damm bildet, der zum Stehenbleiben der Walze führt, den Zugkraftbedarf erheblich erhöht oder der sogar einzelne Bauteile überlasten kann. In einem derartigen Fall wird der Boden auch mehr verschoben als gekrümelt oder rückverfestigt. Dies führt dann auch zu einem schlechten Einebnungsergebnis und zu einer unzureichenden Rückverfestigung des Bodens. Konsequenzen daraus sind spürbare Ertragseinbußen. DE 19633119 zeigt eine Bestellkombination mit Bodenbearbeitungswerkzeugen, Säscharen und einer Walze, die in die Arbeitsrichtung hinter den Bodenbearbeitungswerkzeugen und vor den Säscharen angeordnet ist und mit einer Regeleinrichtung die die Druckbelastung der Walze auf den Boden regelnd ausgebildet ist.

Aufgabe der Erfindung ist es, eine Bestellkombination zu schaffen, bei der die Walze immer sicher vom Boden angetrieben wird, bei der der Bodendruck der Walze optimal gestaltet wird und bei der der Zugkraftbedarf nicht unnötig erhöht wird.

Diese Aufgabe wird mit den aufgeführten Merkmalen des kennzeichnenden Teils des Patentanspruches 1 gelöst.

Durch die Ermittlung der Umdrehungsgeschwindigkeit der Walze und der Ermittlung der tatsächlichen Arbeitsgeschwindigkeit der Bestellkombination stehen die Werte zur Verfügung, die über eine Regeleinrichtung für die Einhaltung eines bestimmten Schlupfgrenzwertes genutzt werden können, der bei Überschreitung dazu führt, dass die Walze so weit entlastet oder belastet wird, bis sie wieder mit der von der Arbeitsgeschwindigkeit abhängigen, vorgegebenen Umdrehungsgeschwindigkeit arbeitet. Dabei wird auch vorausgesetzt, dass die Regeleinrichtung bei einer geringen Druckbelastung auf die Walze den Druck auf die Walze erhöht, um die vorgegebene Umdrehungsgeschwindigkeit zu erreichen oder aber auch die Druckbelastung auf die Walze reduziert, wenn eine zu hohe Druckbelastung eine Ursache für eine zu geringe Umdrehungsgeschwindigkeit der Walze ist.

Die Erfindung sieht dabei vor, dass die Regeleinrichtung über elektrische, pneumatische oder hydraulische Stellsysteme die Druckbelastung auf die Walze regelnd ausgebildet ist. Bei Überschreitung des Schlupfgrenzwertes wird über die Regeleinrichtung über elektrische, pneumatische oder hydraulische Stellsysteme wie Stellmotoren, Pneumatikzylinder oder Hydraulikzylinder die Druckbelastung auf die Walze wie gefordert verändert. Dabei ist es zweckmäßig, das Stellsystem zu wählen, für das bereits ein Versorgungssystem an der Bestellkombination vorhanden ist.

Nach einem weiteren Vorschlag ist vorgesehen, dass die zusätzliche Vorrichtung für die Erfassung der Arbeitsgeschwindigkeit der Bestellkombination dem Traktor oder der Bestellkombination zugeordnet ist. Falls der Traktor bereits mit einer entsprechenden Vorrichtung ausgerüstet ist, kann die Regeleinrichtung für die Ermittlung des Schlupfgrenzwertes die Daten entsprechend nutzen. Kann der Traktor derartige Geschwindigkeitssignale nicht liefern, sieht die Erfindung vor, dass die zusätzliche Vorrichtung für die Erfassung der Arbeitsgeschwindigkeit der Bestellkombination zugeordnet ist. Die Bestellkombination kann dazu mit einem Impulsrad ausgerüstet sein, das wegabhängig die Regeleinrichtung mit den entsprechenden Informationen versorgt, aber auch mit einem GPS-Empfänger oder auch Radarsensor.

Die Erfindung sieht ebenfalls vor, dass bei mehrteiligen Walzen mindestens einer Walze eine Vorrichtung für die Ermittlung der Umdrehungsgeschwindigkeit zugeordnet ist. Bei Doppelwalzen oder bei mehreren nebeneinander angeordneten Walzen kann so mit nur einer Vorrichtung für die Ermittlung der Umdrehungsgeschwindigkeit einer Walze die Druckbelastung für alle Walzen im Sinne der Erfindung über die Regeleinrichtung geregelt werden. Umgekehrt kann aber jede Walze bzw. jeder Walzenkörper individuell mit einer entsprechenden Vorrichtung ausgerüstet werden. In diesem Fall wird die Druckbelastung auf jede Walze bzw. jeden Walzenkörper individuell so geregelt, dass der vorgegebene Schlupfgrenzwert jeder einzelnen Walze nicht überschritten wird.

In Hinblick auf die Verlagerung ist vorgesehen, dass bei Druckentlastung der Walze das entlastete Gewicht auf das Fahrwerk verlagert wird, wobei das Fahrwerk dem Traktors oder der Bestellkombination zugeordnet ist. Damit der Gewichtsanteil, der bei einer Druckentlastung der Walze verlagert wird, nicht die Funktionen anderer Werkzeuge negativ beeinflusst, wird bei dieser Ausführungsform der Erfindung dieses Gewicht nicht auf die Säschare oder auf die Druckrollen der Säschare verlagert, sondern auf das Fahrwerk des Traktors oder der Bestellkombination. Das jeweilige Fahrwerk wird üblicherweise mit einem Reifendruck eingesetzt, der sich nicht negativ auf das Arbeitsergebnis der Bestellkombination auswirkt.

Weitere Einzelheiten und Vorteile des Erfindungsgegenstandes ergeben sich aus der nachfolgenden Beschreibung und der zugehörigen Zeichnung.

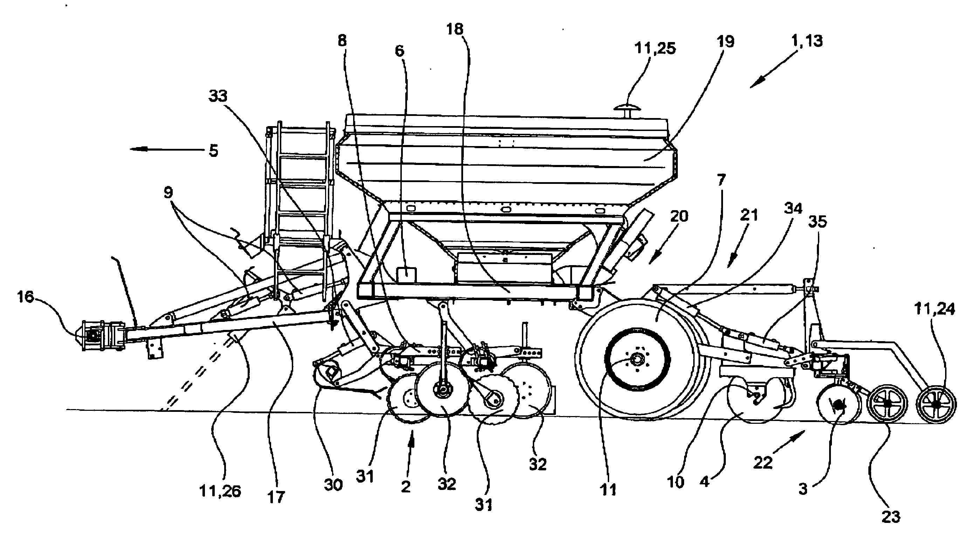

Die Figur zeigt eine Bestellkombination 1, die als gezogene Bestellkombination 13 ausgebildet ist. Die gezogene Bestellkombination 13 wird über die Zugeinrichtung 16 mit dem Dreipunktgestänge, dem Zugpendel oder der Anhängerkupplung eines nicht dargestellten Zugfahrzeuges bzw. Traktors verbunden. Die Zugeinrichtung 16 ist Bestandteil der Deichsel 17, die mit dem Grundrahmen 18 verbunden ist. Auf dem Grundrahmen 18 befindet sich der Saatgutbehälter 19. Zwischen Grundrahmen 18 und Saatgutbehälter 19 ist die Regeleinrichtung 6 untergebracht, die vorzugsweise mit einem nicht dargestellten Bedienterminal in Verbindung steht, das während des Betriebes in der Traktorkabine untergebracht ist. Über das Bedienterminal werden alle Funktionen der Bestellkombination 1 überwacht und auch alle notwendigen Einstellungen vorgenommen. Unterhalb des Grundrahmens 18 befinden sich die Bodenbearbeitungswerkzeuge 2, die dem Rahmen 8 zugeordnet sind, der über die Hydraulikzylinder 9 zusammen mit den Bodenbearbeitungswerkzeugen 2 in der Höhe einstellbar ist. Als Bodenbearbeitungswerkzeuge 2 sind hier Hohlscheiben 31 vorgesehen. Die links und rechts außen am Rahmen 8 der Bodenbearbeitungswerkzeuge 2 angeordneten Begrenzungsscheiben 32 unterstützen die Arbeitseffekte der Hohlscheiben 31. Vorne am Rahmen 8 der Bodenbearbeitungswerkzeuge 2 befinden sich die Planierwerkzeuge 30, die in Relation zu den Bodenbearbeitungswerkzeugen 2 über den Hydraulikzylinder 33 in der Arbeitsstellung einstellbar sind. Hinten am Grundrahmen 18 befindet sich der Tragrahmen 20, der über eine Hubvorrichtung 21 die Walze 4, die Säschiene 22 mit den Säscharen 3 und die den Säscharen 3 zugeordneten Druckrollen 23 und auch das Impulsrad 24 trägt. Die Walze 4 weist die Vorrichtung 10 auf, über die die Umdrehungsgeschwindigkeit der Walze 4 ermittelt wird. Das Impulsrad 24 weist eine zusätzliche Vorrichtung 11 auf, die die Arbeitsgeschwindigkeit der Bestellkombination 1 ermittelt. Es kann auch ein GPS-Empfänger 25 oder ein Radar-Sensor 26 als zusätzliche Vorrichtung 11 zur Ermittlung der tatsächlichen Arbeitsgeschwindigkeit der Bestellkombination 1 genutzt werden. Der Grundrahmen 18 stützt sich auf das Fahrwerk 7 ab, das sich in Fahrtrichtung 5 gesehen hinter den Bodenbearbeitungswerkzeugen 2 befindet. In Fahrtrichtung 5 gesehen ist die Walze 4 hinter dem Fahrwerk 7 angeordnet und vor der Säschiene 22 mit den Säscharen 3. Die zusätzliche Vorrichtung 11 für die Ermittlung der tatsächlichen Arbeitsgeschwindigkeit der Bestellkombination 1 kann auch dem Fahrwerk 7 zugeordnet werden, was in Verbindung mit der Vorrichtung 10 für die Ermittlung der Umdrehungsgeschwindigkeit der Walze 4 eine einfache Lösung darstellt. Die Vorrichtung 10 und die zusätzliche Vorrichtung 11 können aus einfachen Sensoren bestehen, die über Impulsgeber die Signale erzeugen, die dann von der Regeleinrichtung 6 ausgewertet werden und so die Druckbelastung auf die Walze 4 vorgeben. Für die Ausübung der Druckbelastung auf die Walze 4 dient der Hydraulikzylinder 34. Der Hydraulikzylinder 35 dient zur Einstellung des Schardruckes der Säschare 3.

## Patentansprüche

1. Bestellkombination (1) mit Bodenbearbeitungswerkzeugen (2), Säscharen (3) und einer Walze (4), die in Arbeitsrichtung (5) hinter den Bodenbeartieitungswerkzeugen (2) und vor den Säscharen (3) angeordnet ist und mit einer Regeleinrichtung (6), die die Druckbelastung der Walze (4) auf den Boden regelnd ausgebildet ist, wobei die Bestellkombination (1) von einem Fahrwerk (7) getragen wird,
**dadurch gekennzeichnet,**
**dass** eine Vorrichtung (10) vorgesehen ist für die Ermittlung der Umdrehungsgeschwindigkeit der Walze (4) und eine zusätzliche Vorrichtung (11) für die Ermittlung der tatsächlichen Arbeitsgeschwindigkeit der Bestellkombination (1) und dass bei Überschreitung eines vorgegebenen Schlupfgrenzwertes zwischen der Umdrehungsgeschwindigkeit der Walze (4) und der Arbeitsgeschwindigkeit der Bestellkombination (1) die Druckbelastung auf die Walze (4) über die Regeleinrichtung (6) derart verändert wird, dass ein vorgegebener Schlupfgrenzwert der Walze (4) nicht überschritten wird.

2. Bestellkombination nach Anspruch 1,
**dadurch gekennzeichnet,**
**dass** die Regeleinrichtung (6) über elektrische, pneumatische oder hydraulische Stellsysteme die Druckbelastung auf die Walze (4) regelnd ausgebildet ist.

3. Bestellkombination nach Anspruch 1,
**dadurch gekennzeichnet,**
**dass** die zusätzliche Vorrichtung (11) für die Erfassung der Arbeitsgeschwindigkeit der Bestellkombination (1) dem Traktor oder der Bestellkombination (1) zugeordnet ist.

4. Bestellkomblnation nach Anspruch 1,
**dadurch gekennzeichnet,**
**dass** bei mehrteiligen Walzen (4) mindestens einer Walze (4) eine Vorrichtung (10) für die Ermittlung der Umdrehungsgeschwindigkeit der Walze (4) zugeordnet ist.

5. Bestellkombination nach Anspruch 1,
**dadurch gekennzeichnet,**
**dass** bei Druckentlastung der Walze (4) das entlastete Gewicht auf das Fahrwerk (7) verlagert wird, wobei das Fahrwerk (7) dem Traktor oder der Bestellkombination (1) zugeordnet ist.

## Claims

1. A cultivation combination (1) with soil preparation tools (2), sowing coulters (3) and a roller (4) which are arranged in the working direction (5) behind the soil preparation tools (2) and before the sowing coulters (3) and with a control equipment (6) which is designed to regulate the pressure load produced by the roller (4) on the ground, wherein the cultivation combination (1) is supported by a chassis (7),
**characterized**
**in that** an apparatus (10) is provided for determining the rotational speed of the roller (4) and an additional apparatus (11) for determining the actual operating speed of the cultivation combination (1) and in that, upon exceeding a predefined slippage limit value between the rotational speed of the roller (4) and the operating speed of the cultivation combination (1), the pressure load produced by the roller (4) is altered via the control equipment (6) in such a way that a predefined slippage limit value of the roller (4) is not exceeded.

2. The cultivation combination according to Claim 1,
**characterized**
**in that** the control equipment (6) is formed by electrical, pneumatic or hydraulic controlling systems, which regulate the pressure load applied onto the roller (4).

3. The cultivation combination according to Claim 1,
**characterized**
**in that** the additional apparatus (11) for determining the actual operating speed of the cultivation combination (1) is assigned to the tractor or the cultivation combination (1).

4. The cultivation combination according to Claim 1,
**characterized**
**in that**, for multipart rollers (4), at least one roller (4) is assigned to an apparatus (10) for determining the rotational speed of the roller (4).

5. The cultivation combination according to Claim 1,
**characterized**
**in that**, in case of pressure relief of the roller (4), the relieved weight is transferred to the chassis (7) wherein the chassis (7) is assigned to the tractor or the cultivation combination (1).

## Revendications

1. Combinaison de labourage (1) avec outils de travail du sol (2), socs de semoir (3) et un rouleau (4), qui sont disposés dans le sens de travail (5) derrière les outils de travail du sol (2) et devant les socs de semoir (3), et avec un régulateur (6) qui est formé de manière à réguler la charge de pression du rouleau (4) sur le sol, étant donné que la combinaison de labourage (1) est supportée par un châssis (7),
**caractérisée**
**en ce qu'**un dispositif (10) est prévu pour la détermination de la vitesse de rotation du rouleau (4) et un dispositif supplémentaire (11) pour la détermination de la vitesse de travail réelle de la combinaison de labourage (1), et en ce que, en cas de dépassement d'une valeur limite de glissement prédéfinie entre la vitesse de rotation du rouleau (4) et la vitesse de travail de la combinaison de labourage (1), la charge de pression sur le rouleau (4) est modifiée à l'aide du régulateur (6) de manière à ce qu'une valeur limite de glissement prédéfinie du rouleau (4) ne soit pas dépassée.

2. Combinaison de labourage selon la revendication 1,
**caractérisée**
**en ce que** le régulateur (6) est formé de manière à réguler la charge de pression sur le rouleau (4) à l'aide de systèmes de réglage électriques, pneumatiques ou hydrauliques.

3. Combinaison de labourage selon la revendication 1,
**caractérisée**
**en ce que** le dispositif supplémentaire (11) pour la saisie de la vitesse de travail de la combinaison de labourage (1) est affectée au tracteur ou à la combinaison de labourage (1).

4. Combinaison de labourage selon la revendication 1,
**caractérisée**
**en ce que**, pour les rouleaux (4) en plusieurs pièces, au moins un dispositif (10) et affecté à un rouleau (4) pour la détermination de la vitesse de rotation du rouleau (4).

5. Combinaison de labourage selon la revendication 1,
**caractérisée**
**en ce que**, en cas de décharge de pression du rouleau (4), le poids détendu est transféré sur le châssis (7), étant donné que le châssis (7) est affecté au tracteur ou à la combinaison de labourage (1).
